# EUROPÄISCHE PATENTANMELDUNG

(11) **EP 3 747 692 A1**
(43) Veröffentlichungstag der Anmeldung: **09.12.2020**
(21) Anmeldenummer: 20177660.6
(22) Anmeldetag: 01.06.2020
(51) Int. Cl.: B60L 53/64, B60L 53/65, B60L 53/66, G06Q 50/06, G07F 15/00

(54) **ZÄHLERTECHNIK FÜR MESSZÄHLER MIT UNTERSCHIEDLICHEN NUTZERGRUPPEN**

(30) Priorität: 05.06.2019 DE 102019115082
(71) Anmelder: emonvia GmbH, 80797 München (DE)
(72) Erfinder: Fleischer, Patrick, 81379 München (DE); Schlutius, Eduard, 81379 München (DE); Wendrich, Karl, 81379 München (DE); Böhme, Matthias, 81379 München (DE)
(74) Vertreter: Hernandez, Yorck

(57) **Zusammenfassung**

Die Erfindung betrifft ein Verfahren zum effizienten Erfassen und Auswerten von Betriebswerten einer Messtechnik mit unterschiedlichen Zählerstellen, wobei es erfindungsgemäß ermöglicht wird, dass eine Vielzahl von Zählerstellen behandelt wird. Die Zählerstellen können gruppenweise ausgelesen werden und werden nicht ausschließlich singulär abgehandelt, wie es der Stand der Technik zeigt. Erfindungsgemäß wird eine Vielzahl von Zählerstellen abgefragt. Ferner betrifft die vorliegende Erfindung eine entsprechend eingerichtete Systemanordnung. Darüber hinaus wird ein Computerprogrammprodukt mit Steuerbefehlen vorgeschlagen, welche das Verfahren implementieren beziehungsweise die vorgeschlagene Systemanordnung betreiben.

## Beschreibung

Die Erfindung betrifft ein Verfahren zum effizienten Erfassen und Auswerten von Betriebswerten einer Messtechnik mit unterschiedlichen Zählerstellen, wobei es erfindungsgemäß ermöglicht wird eine Vielzahl von Zählerstellen effizient zu behandeln. Erfindungsgemäß wird eine Vielzahl von Zählerstellen individuell abgefragt. Ferner betrifft die vorliegende Erfindung eine entsprechend eingerichtete Systemanordnung. Darüber hinaus wird ein Computerprogrammprodukt mit Steuerbefehlen vorgeschlagen, welche das Verfahren implementieren beziehungsweise die vorgeschlagene Systemanordnung betreiben.

EP 0 780 801 B1 zeigt ein Verfahren und Vorrichtungen für die Verwendung und Verrechnung von elektronischen Zahlungsmitteln in einem offenen und interoperablen System zur automatischen Gebührenerhebung.

DE 10 2009 039 650 A1 zeigt ein Verfahren zum Speisen eines elektrisch betreibbaren Fahrzeugs durch eine elektrische Energie bereitstellende stationäre Ladesäule, wobei die Ladesäule über ein Ladekabel an einen elektrischen Speicher des Fahrzeugs angeschlossen wird. Hier werden singuläre Ladesäulen betrieben.

Aus dem Stand der Technik ist es bekannt unterschiedliche Zählerstellen bereitzustellen, welche jeweils ungeeicht sind. So werden beispielsweise in Parkhäusern Parkdecks bereitgestellt, welche eine Vielzahl von Ladestationen für elektrisch betriebene Fahrzeuge aufweisen, wobei jede Zählerstelle nicht geeicht ist. Hierbei treten Probleme dahingehend auf, dass unterschiedliche Konditionen für die abgestellten Fahrzeuge, welche aufgeladen werden, gelten. Auch werden die einzelnen Ladestationen mit unterschiedlichen Parametern betrieben, sodass es notwendig ist, stets für gleichartige Fahrzeugtypen eben auch gleichartige Parameter einzuspeisen.

Gemäß dem Stand der Technik ist es beispielsweise bekannt, dass in einem Parkhaus in einem ersten Parkdeck Ladestationen gemäß einem ersten Parametersatz betrieben werden und in einem zweiten Parkdeck Ladestationen gemäß einem zweiten Parametersatz betrieben werden. Da die unterschiedlichen Fahrzeuge mit nur jeweils einem Parametersatz betrieben werden können, ist es unmöglich, dass eine Fahrzeugspezifikation in dem nicht zugeordneten Parkdeck erfüllt werden kann. So ist in diesem Beispiel das erste Parkdeck nur für Firmenkunden ausgelegt und das zweite Parkdeck bedient die Unternehmensflotte und folglich müssen separat betriebene Parkdecks bereitgestellt werden.

Somit ist es besonders nachteilig, dass in den jeweiligen Parkdecks eine Überkapazität bereitgestellt werden muss, da die einzelnen Fahrzeugbetreiber sich nicht das Parkdeck aussuchen können, sondern auf eine Zuordnung zu einem Parkdeck angewiesen sind. Benötigt also ein Fahrzeug eine bestimmte Zählerstelle, so kann sich der Fahrzeughalter nicht aussuchen, wo er das Fahrzeug abstellt und auflädt, sondern vielmehr ist er einem Parkdeck zugeordnet und falls dieses bereits vollständig belegt ist gibt es für dieses Fahrzeug keinen Parkplatz bzw. keine Ladesäule. Der Anbieter solcher Ladestationen muss deshalb eine besonders große Anzahl an Parkplätzen mit Ladestationen vorhalten, damit die jeweilige Fahrzeugspezifikation bedient werden kann. Ist ein Parkdeck gemäß dem Stand der Technik belegt, so gibt es also nicht die Möglichkeit, dass das Fahrzeug in dem zweiten Parkdeck abgestellt und geladen wird, da dieses eben eine andere Spezifikation aufweist.

Eine Entwicklung im Stand der Technik ist es, dass zukünftig einzelne Ladestationen geeicht werden müssen und folglich wird die bekannte Konfiguration an Parkplätzen derart erweitert, dass nicht eine Vielzahl von Ladestationen zusammengefasst von einem geeichten Zähler ausgelesen wird, sondern vielmehr müssen zukünftig alle Ladestationen einen geeichten Zähler vorhalten. Dies ist deshalb besonders nachteilig, da gemäß dem Stand der Technik zu den vorhandenen geeichten Zählerstellen noch weitere Zählerstellen hinzukommen, nämlich die geeichten Zählerstellen der einzelnen Ladestationen pro Parkplatz. Zumindest muss gemäß dem Stand der Technik additiv jede Ladestation mit einem geeichten Zähler nachgerüstet werden.

Darüber hinaus ist es besonders nachteilig, dass die entsprechenden physischen Komponenten fehleranfällig sind und gewartet werden müssen. So werden gemäß dem Stand der Technik Parkdecks derart betrieben, dass zukünftig jede Ladesäule einen geeichten Zähler aufweist und zudem bestehen die vorhandenen Sammelzähler, welche ebenfalls geeicht sind, weiterhin zur Verfügung. Dies bedeutet einen Mehraufwand bezüglich der Bereitstellung physischer Komponenten und deren Wartung.

Es besteht daher Bedarf an einem effizienten Verfahren, welches es ermöglicht, dass lediglich eine minimale Anzahl von physischen Komponenten verwendet werden kann und zudem soll die Wartung des Gesamtsystems möglichst effizient ablaufen.

Es ist eine Aufgabe der vorliegenden Erfindung, ein verbessertes, insbesondere ein effizienteres Verfahren vorzuschlagen, welches es ermöglicht, unterschiedliche Zähler gleichzeitig und individuell abzufragen. Hierzu sollen keine gesonderten physischen Komponenten benötigt werden, sondern vielmehr sollen datentechnische Einrichtungen verwendet werden, welche ein effizientes und möglichst wartungsfreies Ausführen des Verfahrens bzw. ein Betreiben der Systemanordnung ermöglichen. Ferner ist es eine Aufgabe der vorliegenden Erfindung eine entsprechend eingerichtete Systemanordnung bereitzustellen sowie ein Computerprogrammprodukt mit Steuerbefehlen vorzuschlagen, welche das Verfahren implementieren beziehungsweise die vorgeschlagene Systemanordnung zumindest teilweise betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum effizienten Erfassen und Auswerten von Betriebswerten einer Messtechnik mit unterschiedlichen geeichten Zählerstellen vorgeschlagen, aufweisend ein Auslesen jeweils mindestens eines sensorisch erfassten Messwerts aus jeder Zählerstelle einer Vielzahl von Zählerstellen, wobei ein Auslesen einer eindeutigen Kennung aus jeder der Zählerstellen vorgesehen ist, die Zählerstellen kommunikativ mit einer Sortiereinheit gekoppelt werden, ein netzwerktechnisches Übermitteln der Messwerte mitsamt zugehöriger Kennungen an die Sortiereinheit und ein Auswerten der erfassten Messwerte unter Verwendung der Sortiereinheit in Abhängigkeit der jeweiligen eindeutigen Kennung vorgesehen ist.

Das vorgeschlagene Verfahren ist effizient, da erfindungsgemäß keine gesammelten Zählerstellen mehr betrieben werden müssen, sondern die einzelnen geeichten Zählerstellen können individuell ausgelesen werden und sodann werden die eingesammelten Zählerstände zentral verarbeitet. In dem eingangs erwähnten Beispiel ist es somit nicht mehr notwendig für jedes Parkdeck bzw. jede Parkebene (die ja für je eine Nutzergruppe separat vorgehalten werden) zu den einzelnen geeichten Zählerstellen eine Sammelzählerstelle vorzuhalten, welche ebenfalls geeicht ist. Die Zählerstellen werden individuell ausgelesen und können sodann zentral abgehandelt werden. Somit muss auch bei einem anderen Auswertealgorithmus nicht die entsprechende Hardware abgeändert werden, sondern vielmehr ist es erfindungsgemäß möglich dies datentechnisch zu bewältigen.

Die Kennung hat gemäß einem Aspekt der vorliegenden Erfindung zwei Teile: erster Teil der Kennung ist die eindeutige Kennung der Mess- bzw. Zähleinheit (diese signiert den Messwert) zweiter Bestandteil ist die Identität des Nutzers (dies kann der Sortierung in den Nutzergruppen dienen). Die Identität des Nutzers muss gemäß einem Aspekt der vorliegenden Erfindung dem Messwert durch den Authentifikationsprozess angehängt werden

Das Auslesen der Zählerstellen an sich erfolgt sensorisch derart, dass die verbrauchten Energieeinheiten gezählt werden und sodann wird mit diesen Messwerten auch eine Kennung ausgelesen, die sich auf die jeweilige Zählerstelle bezieht. Bei der Kennung kann es sich um die Kennung der Zählerstelle an sich handeln oder ein Benutzer übermittelt diese Kennung mittels einer Drahtlosschnittstelle.

Die Vielzahl von Zählerstellen kann beispielsweise auf einem Parkdeck vorgehalten werden und diese Zählerstellen sind gemäß einem Aspekt der Erfindung geeicht. Somit liefern diese ein vertrauenswürdiges Ergebnis, welches additiv verschlüsselt bzw. zertifiziert werden kann. Dies verhindert, dass entsprechende Verbrauchswerte abgefälscht werden. Die ausgelesenen Messwerte werden sodann nicht an einen Sammelzähler übermittelt, der bei dem Parkdeck vorgehalten werden muss, sondern vielmehr werden diese Messwerte mitsamt der entsprechenden Kennung netzwerktechnisch an eine einzelne Sortiereinheit übersendet.

Hierbei ist es besonders vorteilhaft die Sortiereinheit derart auszugestalten, dass diese digital eingerichtet ist, die einzelnen Messwerte anhand der Kennung zur weiteren Verarbeitung zu sortieren. So kann eine entsprechende Sortierung derart erfolgen, dass beispielsweise Firmenkunden anders behandelt werden als Angestellte. Hierzu war gemäß dem Stand der Technik vorgesehen, dass unterschiedliche analoge Systeme vorgehalten wurden, welche analog den jeweiligen Stromverbrauch ausgemessen haben und sodann bei einem einzelnen geeichten Sammelzähler aufaddiert wurden.

Bevorzugt erfolgt das Übermitteln der Messwerte mit den Kennungen kommunikativ an die Sortiereinheit. Das Übermitteln der entsprechenden Kennung impliziert, dass die Datenübertragung bevorzugt digital erfolgt. Gemäß dem Stand der Technik war eine Übermittlung der Kennung nicht notwendig, da die einzelnen Ladesäulen der Parkplätze gesammelt aufgerechnet wurden und somit wurden ganze Packebenen abgerechnet. Während also herkömmlich jeder Kunde implizit dadurch unterschieden wurde, dass er ein bestimmtes Parkdeck angesteuert hat, ist es nunmehr möglich, dass alle Fahrzeughalter individuell irgendeinen Parkplatz aus irgendeiner Parkebene wählen und sodann eine individuelle Kennung der Zählerstelle oder aber des Fahrzeughalters Verwendung findet.

Die kommunikative Kopplung der Zählerstellen mit der Sortiereinheit erfolgt bevorzugt über eine Telekommunikationsinfrastruktur, bevorzugt dem Internet. Somit ist es also möglich, dass die Zählerstellen und die Sortiereinheit räumlich getrennt betrieben werden können. Somit erfolgt eine geographische Entkopplung der Zählerstellen von der Sortiereinheit. Die Sortiereinheit kann virtuell betrieben werden und in einem Rechnerverbund bereitgestellt werden. Somit ist vor Ort lediglich die entsprechende Zählerstelle bzw. die Vielzahl von Zählerstellen vorzuhalten mitsamt einer entsprechenden Eichung.

Zusammenfassend lässt sich also folgern, dass die Sortiereinheit effizient gewartet werden kann, da diese in Form von Steuerbefehlen bereitgestellt werden kann und die Zählerstellen können entfernt von der Sortiereinheit angeordnet werden, da die Zählerstellen mittels eines Telekommunikationsnetzwerks mit den Sortiereinheiten bzw. der Sortiereinheit kommunizieren. Darüber hinaus ist es möglich, lediglich eine einzige Sortiereinheit bereitzustellen, welche entfernte Parkhäuser gesammelt behandelt.

Herkömmliche Infrastrukturen sind typischerweise nicht geeignet, eine Kennung einer Zählerstelle mitsamt dem Messwert zu übermitteln, da diese typischerweise analog ausgestaltet sind und keinerlei entsprechende Schnittstelle vorgesehen ist. Bei einer Vielzahl von Zählerstellen handelt es sich gemäß einem Aspekt der vorliegenden Erfindung um mindestens fünf Zählerstellen, wobei die Anzahl bevorzugt auch größer 10 sein kann. Folglich ist es erfindungsgemäß möglich eine gesamte Parkebene abzuhandeln bzw. sogar ein gesamtes Parkhaus. Folglich lässt sich die Verarbeitung der Messwerte vollständig digital durchführen und lässt sich insbesondere datentechnisch durch ein sogenanntes Backend durchführen. Bei einem Backend handelt es sich um einen Rechnerverbund, der telekommunikationstechnisch mit den Zählerstellen verbunden ist.

Das Auswerten der erfassten Messwerte kann derart erfolgen, dass anhand der Kennung festgestellt werden kann, um welche Benutzergruppe es sich handelt. So können in einem Datenspeicher Zuordnungen vorgehalten werden, die jeder Kennung eine Rolle zuordnen. Diese Rolle kann beispielsweise "Kunde" oder "Belegschaft" sein. Darüber hinaus ist es auch möglich, anhand der Kennung eine spezifische technische Spezifikation anzuwenden, da die jeweilige Kennung einer Konfiguration zugeordnet ist. Folglich dient die Kennung der Verarbeitung der Messwerte, so dass alle Messwerte unterschiedlich behandelt werden können. So können beispielsweise mehrere Algorithmen bereitgestellt werden, wie die Messwerte auszuwerten sind und sodann kann anhand der Kennung festgestellt werden, welcher Algorithmus gerade Anwendung finden soll.

Gemäß einem Aspekt der vorliegenden Erfindung werden die Kennungen Nutzergruppen zugeordnet und das Auswerten erfolgt in Abhängigkeit der Nutzergruppen. Dies hat den Vorteil, dass die Behandlung der einzelnen Nutzergruppen nicht mehr über eine gesonderte physische Komponente erfolgen muss, sondern vielmehr können die einzelnen Nutzergruppen datentechnisch behandelt werden. So können sich einzelne Benutzer bei Gruppen registrieren und sodann erfolgt deren Behandlung bezüglich der Messwerte unterschiedlich. Dies überwindet insbesondere den Nachteil, dass einzelne Nutzergruppen nicht mehr physisch bzw. physikalisch eingerichtet werden müssen, wie es im Stand der Technik der Fall ist. Der Stand der Technik sieht vor, dass die einzelnen Benutzergruppen derart eingeteilt werden, dass jeder Benutzergruppe statisch eine Ladesäule zugewiesen wird. Erfindungsgemäß kann also die Erstellung von Nutzergruppen dynamisch erfolgen.

Gemäß einem weiteren Aspekt der vorliegenden Erfindung werden die Zählerstellen in Ladesäulen für elektrisch angetriebene Fahrzeuge integriert. Dies hat den Vorteil, dass elektrisch angetriebene Fahrzeuge nunmehr in einem Parkhaus gemäß einer freien Parkplatzauswahl abgestellt werden können und nicht mehr zugewiesene Parkplätze nutzen müssen.

Gemäß einem weiteren Aspekt der vorliegenden Erfindung werden die Zählerstellen in eine Haustechnik integriert und die Sortiereinheit wird gemäß einem Doppeltarifzähler betrieben. Dies hat den Vorteil, dass auch in einer Haustechnik die Messstellen vereinfacht werden können und nicht mehr gesondert physische Zähler eingebaut werden müssen. Es können herkömmliche Zähler verwendet werden, die über dem Messwert hinaus eine Kennung übermitteln. Die Abrechnung muss dann nicht mehr im Haus selbst erfolgen, sondern vielmehr kann eine entfernte Sortiereinheit damit beauftragt werden.

Gemäß einem weiteren Aspekt der vorliegenden Erfindung erkennt die Sortiereinheit einen Hochtarif und einen Niedertarif in Abhängigkeit der eindeutigen Kennung. Dies hat den Vorteil, dass für unterschiedliche Tarife kein gesonderter Zähler installiert werden muss, sondern vielmehr kann ein Tarif anhand der eindeutigen Kennung bestimmt werden. So kann zu einer bestimmten Uhrzeit eine erste Kennung vergeben werden und zu einer zweiten Uhrzeit kann eine zweite Kennung vergeben werden. Innerhalb der Haustechnik wird sodann der Messwert ausgelesen und eine Kennung vergeben. Die Daten müssen sodann nicht mehr aufwendig innerhalb des Hauses ausgewertet werden, sondern können vielmehr an eine entfernte Stelle übermittelt werden und dort ausgewertet werden.

Gemäß einem weiteren Aspekt der vorliegenden Erfindung wird die eindeutige Kennung in der Zählerstelle abgespeichert oder wird durch eine Benutzereingabe ermittelt. Dies hat den Vorteil, dass die Kennung in der Zählerstelle selbst abgespeichert wird oder aber ein Benutzer gibt diese ein. So kann ein Benutzer beispielsweise ein entsprechend eingerichtetes Display verwenden und hier seine Kennung eingeben.

Gemäß einem weiteren Aspekt der vorliegenden Erfindung wird die eindeutige Kennung mittels einer drahtlosen Schnittstelle ausgelesen. Dies hat den Vorteil, dass der Benutzer beispielsweise anhand einer Smartcard seine Kennung eingeben kann und sodann kann die Kennung mitsamt dem (von der geeichten Messeinheit signierten) Zählerstand übermittelt werden.

Gemäß einem weiteren Aspekt der vorliegenden Erfindung wird dem von der Messeinheit signiertem Zählerstand/ Messwert die eindeutige Kennung des Nutzers durch einen Authenfikationsprozess zusätzlich angehängt. Dies kann mittels einer RFID-Karte als Authentifikations-Schlüssel, der dem Nutzer eindeutig zugeordnet ist, erfolgen. Dies hat den Vorteil, dass der Benutzer ohne großen Aufwand seine Kennung bereitstellen kann und insbesondere kann ein entsprechender Transmitter auch im Fahrzeug selbst integriert werden. Somit erfolgt eine vollautomatische Authentisierung. RFID-Karte steht lediglich beispielhaft für Nutzer oder Fahrzeug-Authentifikationsprozess, der dem signierten Messwert der geeichten Messeinheit die eindeutige Kennung des Nutzers anhängt. RFID ist eine konkrete Ausprägung des Authentifikationsprozesses. Weitere Ausprägungen arbeiten via einer speziellen APP oder via IS015118 Kommunikation des Autos mit dem Ladepunkt.

Gemäß einem weiteren Aspekt der vorliegenden Erfindung werden die erfassten Messwerte elektronisch signiert. Dies hat den Vorteil, dass die erfassten Messwerte der Zählerstellen abgesichert werden und somit vor einem Verfälschen geschützt werden.

Gemäß einem weiteren Aspekt der vorliegenden Erfindung wird die eindeutige Kennung anhand einer Authentisierung überprüft. Dies hat den Vorteil, dass eine Kennung vertrauenswürdig übermittelt wird und somit ein Abfälschen von Werten wiederum verhindert wird.

Gemäß einem weiteren Aspekt der vorliegenden Erfindung umfasst ein Auswerten der erfassten Messwerte ein Aufaddieren der Messwerte. Dies hat den Vorteil, dass die Messwerte gemäß voreingestellten Algorithmen aufaddiert werden können. Dies kann derart erfolgen, dass bestimmte Gruppen aufaddiert werden und folglich kann beispielsweise ausgegeben werden, wie viel alle Teilnehmer der Gruppe "Kunde" verbraucht haben.

Gemäß einem weiteren Aspekt der vorliegenden Erfindung werden mehrere virtuelle Zähler der Sortiereinheit kommunikationstechnisch nachgeschaltet. Dies hat den Vorteil, dass lediglich eine zentrale Sortiereinheit vorzuhalten ist und weitere Zähler nunmehr rein virtuell betrieben werden können. Vorzugsweise werden die Zähler anhand von Steuerbefehlen bereitgestellt.

Gemäß einem weiteren Aspekt der vorliegenden Erfindung ist ein Erfassen eines geeichten Stromverbrauchs eines Ladevorgangs, einer Identität eines Nutzers, einer Identität eines Ladepunktes, einer Information zum Ladetarif und/ oder einer Zeitinformation zum Ladevorgang vorgesehen. Dies hat den Vorteil, dass die Auswertung anhand einer Vielzahl von bereitgestellten Daten durchgeführt werden kann.

Die Aufgabe wird auch gelöst durch eine Systemanordnung zum effizienten Erfassen und Auswerten von Betriebswerten einer geeichten Messtechnik mit unterschiedlichen Zählerstellen, aufweisend Schnittstelleneinheiten eingerichtet zum Auslesen jeweils mindestens eines sensorisch erfassten Messwerts aus jeder Zählerstelle einer Vielzahl von Zählerstellen, wobei die Schnittstelleneinheiten zum Auslesen einer eindeutigen Kennung aus jeder der Zählerstellen vorgesehen sind, die Zählerstellen kommunikativ mit einer Sortiereinheit gekoppelt sind, Netzwerkkomponenten eingerichtet zum netzwerktechnischen Übermitteln der Messwerte mitsamt zugehöriger Kennungen an die Sortiereinheit vorgesehen sind und die Sortiereinheit eingerichtet zum Auswerten der erfassten Messwerte in Abhängigkeit der jeweiligen eindeutigen Kennung vorgesehen ist.

Die Aufgabe wird auch gelöst durch ein Computerprogrammprodukt mit Steuerbefehlen, welche das Verfahren ausführen und die vorgeschlagene Anordnung betreiben, wenn sie auf einem Computer zur Ausführung gebracht werden.

Erfindungsgemäß ist es besonders vorteilhaft, dass das Verfahren zum Betreiben der vorgeschlagenen Vorrichtungen und Einheiten bzw. der Systemanordnung verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Anwendungsszenario, wie es der Stand der Technik vorsieht;
- Figur 2:: ein schematisches Anwendungsszenario mit mehreren Sammelzählern, wie es der Stand der Technik vorsieht;
- Figur 3:: ein schematisches Anwendungsszenario der vorliegenden Erfindung, wobei die vorgeschlagene Systemanordnung gemäß einem Aspekt der vorliegenden Erfindung zum Einsatz kommt;
- Figur 4:: ein weiteres schematisches Anwendungsszenario der vorliegenden Erfindung, wobei die vorgeschlagene Systemanordnung gemäß einem Aspekt der vorliegenden Erfindung zum Einsatz kommt; und
- Figur 5:: ein schematisches Ablaufdiagramm eines Verfahrens zum effizienten Erfassen und Auswerten von Betriebswerten einer Messtechnik mit unterschiedlichen geeichten Zählerstellen gemäß einem weiteren Aspekt der vorliegenden Erfindung.

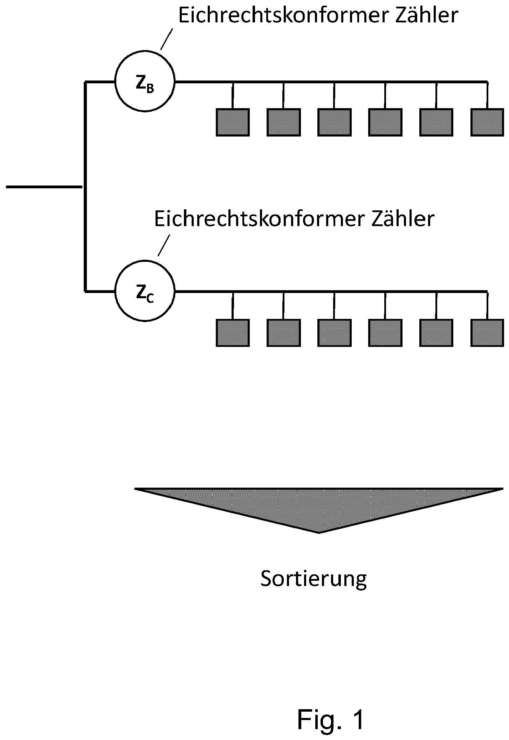

Figur 1 zeigt ein Messkonzept gemäß dem Stand der Technik, wobei auf der rechten Seite anhand der Rechtecke unterschiedliche Verbraucher dargestellt sind, die der Benutzergruppe B angehören und entsprechende Zähler nicht eichrechtskonform ausgestaltet sind. Auf der linken Seite sind zentrale Sammelzähler Z eingezeichnet, die gesammelt die Benutzergruppen B bzw. C behandeln. Sodann erfolgt eine Sortierung der Verbräuche je Nutzergruppe über eine physikalische Trennung der Nutzergruppen. Im vorliegenden Beispiel ist die Benutzergruppe B auf einer ersten Parkebene untergebracht und die Benutzergruppe C auf einer zweiten Parkebene. Die einzelnen Parkebenen werden hierbei gemäß dem Stand der Technik unterschiedlich behandelt und es besteht die nachteilige Notwendigkeit jeweils Sammelzähler Z vorzuhalten. Dies wird erfindungsgemäß überwunden.

Ungeeichte Verbraucher hängen an einer vom Messstellenbetreiber abgenommenen Messeinrichtung, die die Verbräuche misst. Die Summe dieser Verbräuche dient dann zur Erstellung der Stromabrechnung. Soll eine Sortierung der Verbräuche von verschiedenen Nutzer- bzw. Verbrauchergruppen erfolgen, so müssen diese physikalisch getrennt erfasst werden und benötigen daher eine getrennte Stromzufuhr. Jede Gruppe von Verbrauchern muss an einen eigenen geeichten Messzähler angeschlossen werden. Dieser Messzähler erfasst und summiert den Gesamtverbrauch der zugehörigen Nutzergruppe.

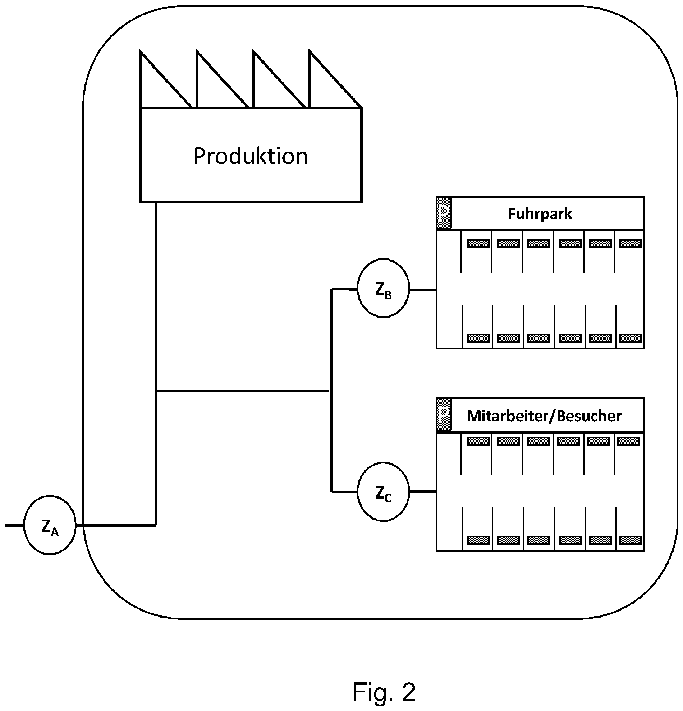

Figur 2 zeigt ein weiteres Anwendungsszenario gemäß dem Stand der Technik, bei dem noch ein weiterer Sammelzähler der Benutzergruppe A vorzusehen ist. So kann es sich bei dem Zähler ZA um einen Zähler im Hausanschluss handeln, der den Gesamtverbrauch des Stroms am Standort erfasst. Die Benutzergruppe B ist hierbei ein Sammelzähler des Fuhrparks. Dieser erfasst den Gesamtverbrauch aller Ladevorgänge der internen Fahrzeugflotte. Der Strom ist beispielsweise befreit von der Mehrwertsteuer. Der Zähler der Benutzergruppe C ist für Mitarbeiter bzw. Besucher. Dieser erfasst den Gesamtverbrauch an der Ladevorgänge der Mitarbeiter und Besucher. Der Strom ist nicht von der Mehrwertsteuer befreit und folglich ist hierzu ein eigener Zähler gemäß dem Stand der Technik einzurichten.

Zusammenfassend lässt sich folgern, dass der Stand der Technik den Nachteil aufweist, dass eine Sortierung der Ladevorgänge gesondert erfolgen muss und hierbei muss zwischen dem eigenen Fuhrpark und Externen unterschieden werden. Es erfolgt eine getrennte Erfassung der Stromverbräuche und die Sortierung erfolgt physikalisch dadurch, dass Autos des Vortrags andere Stellplätze bzw. Ladepunkte nutzen als die Autos der Mitarbeiter bzw. der Besucher und die Ladeinfrastruktur muss jeweils an einem eigenen Stromzähler hängen. Dies ist immer Stand der Technik besonders nachteilig.

Die Ausgangssituation in der Elektromobilität ist wie folgt. Parallel zu den steigenden Zulassungszahlen von Elektroautos wird in Deutschland zunehmend auch die Ladeinfrastruktur entsprechend dafür aufgebaut. Die Ladeinfrastruktur wird dabei in verschiedenen Bereichen aufgebaut. Zum einen im privaten Bereich, im öffentlichen Bereich (Ladesäulen, DC auf den Bundesautobahnen) und im halb-öffentlichen Bereich wie Supermärkte oder Unternehmen. Der Aufbau von Ladeinfrastruktur im privaten Bereich kann oftmals sehr beschwerlich oder bisweilen praktisch unmöglich sein. Speziell den Unternehmen als Arbeitgeber kommt deshalb eine zentrale Rolle bei der Elektrifizierung des individuellen Personenverkehrs zu. Für Arbeitgeber wird es zunehmend wichtig, dass Sie Ihren Mitarbeitern eine Lademöglichkeit für den Privat-PKW während der Arbeitszeit am Arbeitsplatz anbieten können. Darüber hinaus ist es oft auch kostengünstiger, Mitarbeiterparkplätze mit Ladeinfrastruktur auszustatten, als im privaten Bereich teure und umfangreiche Nachrüstungen umzusetzen.

Bei vielen Unternehmen liegen häufig verschiedene Nutzungsszenarien parallel vor:
- Lademöglichkeiten für die firmeneigene Fahrzeugflotte (Lieferwagen, Fuhrparks, Dienstwagen etc.)
- Lademöglichkeiten für Besucher (entgeltlich oder gratis)
- Lademöglichkeiten für Mitarbeiter (entgeltlich oder gratis)

Spezielle Problemstellungen eines Unternehmens mit verschiedenen Ladeszenarien Den o.g. komplexen Nutzungsszenarien steht bei Unternehmen eine oftmals ebenso komplexe Situation hinsichtlich der Steuer- und Abgabensituation für den verwendeten Ladestrom gegenüber. Viele Unternehmen, die beispielsweise energieintensive Produktionsprozesse haben, können von der EEG Umlage und der Stromsteuer befreit sein, d.h. sie können zur Produktion ihrer eigenen Produkte einen vergünstigten Strom verwenden, um international konkurrenzfähig zu sein. Der Strom zum Laden einer firmeninternen Fahrzeugflotte ist in der Regel von der Mehrwertsteuer ausgenommen, wohingegen auf den Ladestrom, der gegen ein Entgelt an Besucher oder Mitarbeiter abgegeben wird, die Mehrwertsteuer zu entrichten ist.

Hinsichtlich der Elektromobilität entsteht durch diese steuerlichen Aspekte eine weitere technische Komplexität: Unternehmen müssen den Strom zum Laden ihrer internen Fahrzeugflotte steuerlich und abgabentechnisch anders behandeln, als den Ladestrom für das Laden der PKW von Mitarbeitern oder Besuchern. Da dieser Strom beispielsweise der Mehrwertsteuer unterliegt.

Dies hat dadurch unmittelbar technische Konsequenzen für das zugehörige Messkonzept. So müssen die Strommengen für die interne Flotte beispielsweise getrennt und unabhängig von den Strommengen für die Mitarbeiter und Besucher erfasst werden. Konkret hat dies zur Folge, dass auch die Ladepunkte bzw. Stellplätze für diese beiden Nutzungsszenarien baulich und physikalisch bislang getrennt und damit doppelt aufgebaut werden müssen. Die getrennten Parkbereiche mit der zugehörigen Ladeinfrastruktur müssen an physikalisch verschiedenen und getrennten Stromzählern angeschlossen sein, damit die Strommengen für die einzelnen Ladevorgänge je nach Nutzungskontext (Szenario) getrennt erfasst werden. Dadurch wird dann eine differenzierte steuerliche und abgabentechnische Behandlung der Strommengen in den jeweiligen unterschiedlichen Nutzungsszenarien möglich.

Stand der Technik sind derzeit noch Ladepunkte mit nicht eichrechtskonformer Hardware. Diese Ladepunkte verfügen über keine geeichte Messeinrichtung und sind daher auch nicht vom Netzbetreiber abgenommen.

In Figur 2 werden die Strommengen für die Ladevorgänge des firmeneigenen Fuhrparks getrennt von den Strommengen der Ladevorgänge von Mitarbeitern/ Besuchern erfasst. Die Sortierung der Ladevorgänge erfolgt dadurch, dass die Parkplätze und damit die Ladepunkte für Flottenfahrzeuge räumlich und physikalisch von den Parkplätzen der Mitarbeiter/ Besucher getrennt sind. Die Authentifikation der Nutzergruppen muss hier in Form einer physischen Zugangskontrolle erfolgen. Zusätzlich kann noch eine individuelle Authentifikation am Ladepunkt erfolgen. Somit erfasst Zähler Z_B nur die Ladeströme des Fuhrparks und Z_C nur die Ladeströme der Mitarbeiter/Besucher. Der Ladestrom durch Zähler Z_B kann ohne Mehrwertsteuer abgegeben werden. Für die Strommengen, die durch Zähler Z_C laufen, muss das Unternehmen jedoch noch nachträglich Mehrwertsteuer abführen - deshalb ist diese separate Erfassung der Strommengen zwingend notwendig.

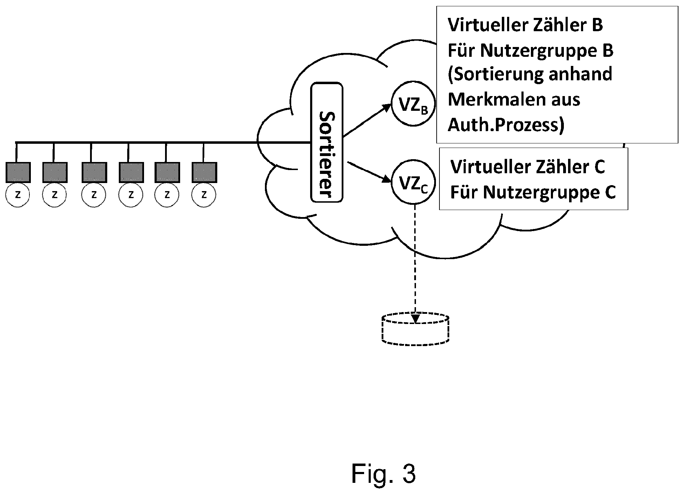

Nachteile dieses herkömmlichen Verfahrens, welche erfindungsgemäß überwunden werden, sind:
o Für die beiden Nutzungsszenarien Fuhrpark und Mitarbeiter/ Besucher werden räumlich getrennte (redundante) Parkplätze mit Ladeinfrastruktur benötigt
o Dadurch werden zwei physikalische Zähler inklusive des Installationsaufwandes benötigt
o Die Auslastung der Ladeinfrastruktur ist niedriger, als dies der Fall wäre, wenn beide Nutzergruppen die Ladeinfrastruktur nutzen könnten
o Die Zählerstände müssen jährlich manuell ausgelesen werden Figur 3 zeigt die erfindungsgemäße Lösung, wobei auf der linken Seite eichrechtskonforme Verbraucher angeordnet sind, die von unterschiedlichen Nutzergruppen gemischt verwendet werden können. Dies ist deshalb der Fall, da erfindungsgemäß eine Kennung an die Sortiereinheit übermittelt wird, anhand derer die Zähler die einzelnen Verbraucher zuordnen können.

Die zunehmende Miniaturisierung von geeichten Messeinrichtungen ermöglicht es, dass diese direkt in den Verbraucher wie z.B. Wandladestationen oder Wärmepumpen gemäß einem Aspekt der vorliegenden Erfindung selber eingebaut werden können. Hinter dem geeichten herkömmlichen Summen-Zähler hängen nun Verbraucher mit integrierten geeichten individuellen Messzählern Jeder der eichrechtskonformen Messzähler, der beispielsweise bereits in die Hardware des Verbrauchers integriert worden sein kann, signiert die Messwerte individuell und eindeutig (Zuordnung der Messwerte und Sicherung der Messwerte vor Manipulation) speichert ggfs. die einzelnen signierten Messwerte dauerhaft in einem lokalen Speicher ab. Die Verbraucher werden eindeutig über eine Authentifikationsprozess identifiziert und dem signierten Messwert angehängt Erfindung.

Der Prozess umfasst gemäß einem Aspekt der vorliegenden Erfindung die geeichte Messung im Verbraucher, Signierung der Messwerte, Anhängen der Unterscheidungsmerkmale des Authentifizierungsprozesses, Übermittlung der Messwerte an das virtuelle Summier- und Sortierwerk, Summierung der Einzelwerte in den jeweiligen virtuellen Zählwerken (=virtuellen Zähler) der herkömmliche physische Summenzähler wird durch eine arithmetische Summenbildung (beispielsweise in der Cloud) der eichrechtskonformen Einzel-Werte der geeichten Einzelzähler ersetzt. Dieser Summenbildung funktioniert wie ein virtuelles Zählwerk, welches die geeichten und signierten Einzelwerte aufsummiert.

Anhand der Unterscheidungsmerkmale, die den signierten Einzelmesswerten durch den Authentifikationsprozess angehängt werden, können die Einzelmesswerte dann mittels einer Sortierfunktion nach Nutzergruppen mehreren verschiedenen virtuellen Zählwerken zur Summation zugeordnet werden.

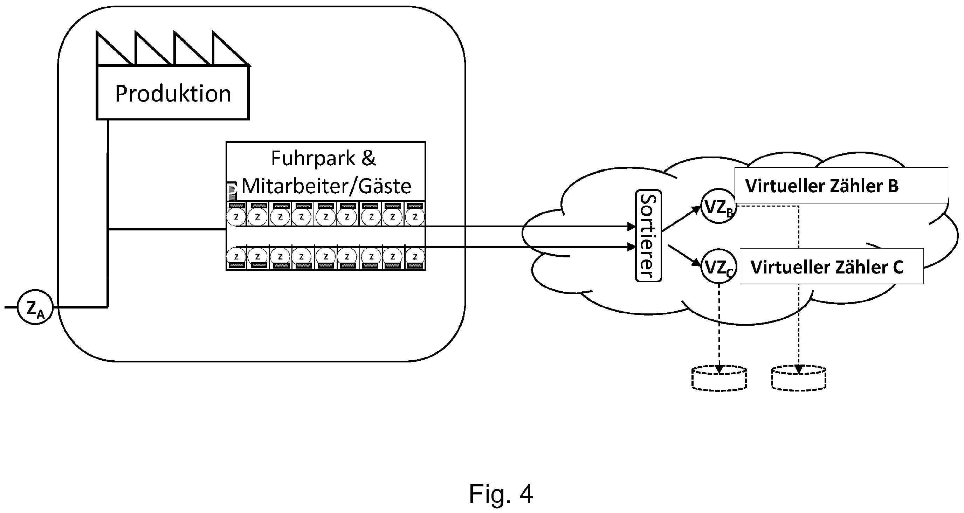

Figur 4 zeigt ein weiteres Anwendungsbeispiel der vorliegenden Erfindung, wobei die Daten netzwerktechnisch übermittelt werden und sodann in einer Rechnerumgebung abgehandelt werden. Der Parkplatz ist mit Ladesäulen ausgestattet, welche eichrechtskonform ausgestaltet sind und folglich können Mitarbeiter und Gäste frei einen Parkplatz wählen und müssen nicht gesonderte Parkebenen ansteuern. Die einzelnen Messwerte können über einen Authentifizierungsprozess den verschiedenen Nutzungsszenarien zugeordnet werden.

Eine spezielle Anwendung der Erfindung bei Unternehmen mit verschiedenen Ladeszenarien ergibt sich wie folgt.

Seit April 2019 ist in Deutschland eine Abrechnung von Ladevorgängen nur noch zugelassen, wenn es sich um eine vom Eichamt zulässige Messung handelt. Diese setzt eine Abnahme des in der Ladestation verbauten Messzählers durch gängige Prüfbehörden (VDE/PTB) voraus und inkludiert eine Signatur der Messwerte innerhalb der Ladestation, um eine Manipulation dieser Werte auf dem Weg von der Ladestation bis zur Backend und darüber hinaus zu verhindern. Die oben beschriebene Erfindung eines virtuellen Mess- und Sortierkonzepts macht sich diese eichrechtlich konformen Messzähler zu Eigen. Statt eines Summenzählers zur Erfassung einer definierten Verbrauchs-Gruppen wird die Strommenge durch Summation der geeichten Einzelwerte der Ladestationen erhalten und diese direkt dem Verursacher zugeordnet. Auf den teilweise sehr kostspieligen Einbau von geeichten (Summen-)Stromzähler in der Stromverteilung von Ladeinfrastrukturen kann somit verzichtet werden.

Die einzelnen Nutzer der beiden Nutzergruppen erhalten gemäß einem Aspekt der vorliegenden Erfindung individuelle RFID-Karten, anhand derer die Nutzer sich individuell an den Ladepunkten Authentifizieren können. Nach erfolgreicher Authentifizierung wird der Ladevorgang gestartet. Der Ladepunkt erfasst den geeichten Stromverbrauch des Ladevorganges und signiert diesen Messwert mittels eines Zertifikats. Ein Speicher innerhalb der Ladestation stellt eine lokale Sicherung der signierten Messwerte inklusive des Authentifizierers in Form einer sogenannten Transaktion sicher, welche bei Bedarf lokal ausgelesen werden können.

Eine Transaktion ist eine Datei mit einem definierten Format und umfasst gemäß einem Aspekt der vorliegenden Erfindung folgende Informationen:
- Geeichter Stromverbrauch des Ladevorgangs
- Identität des Nutzers
- Identität des Ladepunktes
- Preisinformation zum Ladetarif
- Zeitinformation zum Ladevorgang
- ...

Die einzelnen Nutzer können verschiedenen Nutzergruppen wie Fuhrpark oder Mitarbeiter zugeordnet werden. Der virtuelle Zähler VZ_B kumuliert dann sämtliche Strommengen, die in die Fahrzeuge des Fuhrparks geladen werden auf. Diese Strommengen können beispielsweise von der Mehrwertsteuer befreit sein. Das heißt, das Unternehmen kann den vergünstigten Strom einfach an die Fahrzeuge des Fuhrparks abgeben. Für die Strommengen, die an Mitarbeiter oder Besucher (entgeltlich) abgegeben werden ist dies nicht zulässig. Dazu kumuliert der virtuelle Zähler VZ_C die gesamten Strommengen, die an Besucher oder Mitarbeiter abgegeben werden, auf. Dieser Wert ist dann gemäß einem Aspekt der vorliegenden Erfindung die Basis, um die entsprechende Mehrwertsteuer zu berechnen und abzuführen. Durch einen eindeutigen Authentifizierungsprozess via RFID-Karte, Smartphone, ISO15118 oder ähnlichem und der Tatsache, dass jeder Ladepunkt eichrechtskonform ist, kann der Einbau eines physikalischen Zählers vor der Stromverteilung des Parkplatzes entfallen. Dies stellt signifikantes Kosteneinsparpotential dar. Zusätzlich ermöglicht dieses Verfahren eine flexible Nutzung von Ladeinfrastruktur durch den Fahrer, da jede beliebige Station innerhalb eines Unternehmens genutzt werden kann ohne zwei getrennte Gruppen zu benötigen. Ändern sich Abgaben oder Steuern kann dies in der Sortier- und Berechnungslogik einfach angepasst werden ohne die Stromverteilung selber aufwendig und teuer zu ändern.

Eine weitere spezielle Anwendung der Erfindung ergibt sich bei Häusern mit Wärmepumpen. Eine Wärmepumpe hängt beispielsweise im EFH an einem eigenen Stromkreis mit einem eigenen Doppeltarifzähler. Dieser Zähler verwendet zwei Zählwerke "HT" (Hochtarif) und "NT" (Niedertarif). Das HT-Zählwerk misst dabei die Energie, die tagsüber verbraucht wird - das NT-Zählwerk den Energieverbrauch in der Nacht. Dieses Doppelzählwerk ist zusätzlich zum normalen Stromzähler des Hausanschlusses eingebaut.

Die Situation unter Anwendung der Erfindung ist wie folgt. Zusätzlich zum Zähler des Hausanschlusses wird die Wärmepumpe gemäß einem Aspekt der vorliegenden Erfindung selber mit einem eichrechtskonformen Messzähler wie oben beschrieben ausgestattet und an die Sortier- und Zähllogik des Backends angebunden. Dadurch ist eine Sortierung des Stromverbrauchs des Hauses in Stromverbrauch der Wärmepumpe und den restlicher Verbrauch möglich. Der Verbrauch der Wärmepumpe wird aus dem Verbrauch des Hauses quasi ausgelöst. Die Stromverbräuche können dann je nach Uhrzeit zu der sie anfallen auf zwei virtuellen Zählwerken VZ_HT und VZ_NT kumuliert und mit dem zugehörigen Tarif multipliziert werden. Das Verfahren wäre auch bei zeitlich variablen Tarifen möglich.

Der Standardzähler des Hausanschlusses kann auch durch einen eichrechtskonformen Messzähler wie oben beschrieben ersetzt und an die Sortier- und Zähllogik des Backends angebunden werden. Dann muss kein Stromzähler mehr manuell ausgelesen werden.

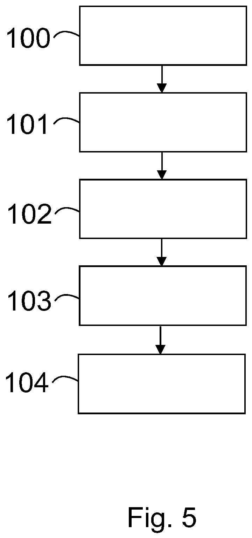

Figur 5 zeigt in einem schematischen Ablaufdiagramm ein Verfahren zum effizienten Erfassen und Auswerten von Betriebswerten einer geeichten Messtechnik mit unterschiedlichen Zählerstellen, aufweisend ein Auslesen 100 jeweils mindestens eines sensorisch erfassten Messwerts aus jeder Zählerstelle einer Vielzahl von Zählerstellen, wobei ein Auslesen 101 einer eindeutigen Kennung aus jeder der Zählerstellen vorgesehen ist, die Zählerstellen kommunikativ mit einer Sortiereinheit gekoppelt 102 werden, ein netzwerktechnisches Übermitteln 103 der Messwerte mitsamt zugehöriger Kennungen an die Sortiereinheit und ein Auswerten 104 der erfassten Messwerte unter Verwendung der Sortiereinheit in Abhängigkeit der jeweiligen eindeutigen Kennung vorgesehen ist.

Der Fachmann erkennt hierbei, dass die Schritte weitere Unterschritte aufweisen können und insbesondere, dass die Verfahrensschritte jeweils iterativ und/ oder in anderer Reihenfolge ausgeführt werden können.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben, wenn sie auf einem Computer zur Ausführung gebracht werden.

## Patentansprüche

1. Verfahren zum effizienten Erfassen und Auswerten von Betriebswerten einer Messtechnik mit unterschiedlichen geeichten Zählerstellen, aufweisend:
- ein Auslesen (100) jeweils mindestens eines sensorisch erfassten Messwerts aus jeder Zählerstelle einer Vielzahl von Zählerstellen, **dadurch gekennzeichnet, dass**
- ein Auslesen (101) einer eindeutigen Kennung aus jeder der Zählerstellen vorgesehen ist;
- die Zählerstellen kommunikativ mit einer Sortiereinheit gekoppelt (102) werden;
- ein netzwerktechnisches Übermitteln (103) der Messwerte mitsamt zugehörigen Kennungen an die Sortiereinheit vorgesehen ist; und
- ein Auswerten (104) der erfassten Messwerte unter Verwendung der Sortiereinheit in Abhängigkeit der jeweiligen eindeutigen Kennung vorgesehen ist.

2. Verfahren nach Anspruch 1, **dadurch gekennzeichnet, dass** die Kennungen Nutzergruppen zugeordnet werden und das Auswerten (104) in Abhängigkeit der Nutzergruppen erfolgt.

3. Verfahren nach Anspruch 1 oder 2, **dadurch gekennzeichnet, dass** die Zählerstellen in Ladesäulen für elektrisch angetriebene Fahrzeuge integriert werden.

4. Verfahren nach einem der Ansprüche 1 oder 2, **dadurch gekennzeichnet, dass** die Zählerstellen in eine Haustechnik integriert werden und die Sortiereinheit gemäß einem Doppeltarifzähler betrieben wird.

5. Verfahren nach Anspruch 4, **dadurch gekennzeichnet, dass** die Sortiereinheit einen Hochtarif und einen Niedertarif in Abhängigkeit der eindeutigen Kennung erkennt.

6. Verfahren nach einem der vorhergehenden Ansprüche, **dadurch gekennzeichnet, dass** die eindeutige Kennung in der Zählerstelle abgespeichert wird oder durch eine Benutzereingabe ermittelt wird.

7. Verfahren nach einem der vorhergehenden Ansprüche, **dadurch gekennzeichnet, dass** die eindeutige Kennung mittels einer drahtlosen Schnittstelle ausgelesen wird.

8. Verfahren nach Anspruch 7, **dadurch gekennzeichnet, dass** die eindeutige Kennung der Nutzer durch einen Authentifikationsprozess vermittelt wird.

9. Verfahren nach einem der vorhergehenden Ansprüche, **dadurch gekennzeichnet, dass** die erfassten Messwerte elektronisch signiert werden.

10. Verfahren nach einem der vorhergehenden Ansprüche, **dadurch gekennzeichnet, dass** die eindeutige Kennung anhand einer Authentisierung überprüft wird.

11. Verfahren nach einem der vorhergehenden Ansprüche, **dadurch gekennzeichnet, dass** ein Auswerten (104) der erfassten Messwerte ein Aufaddieren der Messwerte umfasst.

12. Verfahren nach einem der vorhergehenden Ansprüche, **dadurch gekennzeichnet, dass** mehrere virtuelle Zähler der Sortiereinheit kommunikationstechnisch nachgeschaltet werden.

13. Verfahren nach einem der vorhergehenden Ansprüche, **dadurch gekennzeichnet, dass** ein Erfassen eines geeichten Stromverbrauchs eines Ladevorgangs, einer Identität eines Nutzers, einer Identität eines Ladepunktes, einer Information zum Ladetarif und/ oder einer Zeitinformation zum Ladevorgang vorgesehen ist.

14. Systemanordnung zum effizienten Erfassen und Auswerten von Betriebswerten einer Messtechnik mit unterschiedlichen geeichten Zählerstellen, aufweisend:
- Schnittstelleneinheiten eingerichtet zum Auslesen (100) jeweils mindestens eines sensorisch erfassten Messwerts aus jeder Zählerstelle einer Vielzahl von Zählerstellen, **dadurch gekennzeichnet, dass**
- die Schnittstelleneinheiten zum Auslesen (101) einer eindeutigen Kennung aus jeder der Zählerstellen vorgesehen sind;
- die Zählerstellen kommunikativ mit einer Sortiereinheit gekoppelt (102) sind;
- Netzwerkkomponenten eingerichtet zum netzwerktechnischen Übermitteln (103) der Messwerte mitsamt zugehöriger Kennungen an die Sortiereinheit vorgesehen sind; und
- die Sortiereinheit eingerichtet zum Auswerten (104) der erfassten Messwerte in Abhängigkeit der jeweiligen eindeutigen Kennung vorgesehen ist.

15. Computerprogrammprodukt mit Steuerbefehlen, welche das Verfahren gemäß einem der Ansprüche 1 bis 13 ausführen, wenn sie auf einem Computer zur Ausführung gebracht werden.
